# EUROPEAN PATENT APPLICATION

(11) **EP 4 563 644 A1**
(43) Date of publication of application: **04.06.2025**
(21) Application number: 23846349.1
(22) Date of filing: 20.07.2023
(51) Int. Cl.: C08L 27/12, C08K 3/22, C08K 5/14, C08L 27/16, C08L 27/18, C09K 3/10

(54) **CROSSLINKABLE FLUORORUBBER COMPOSITION AND MOLDED ARTICLE**

(30) Priority: 25.07.2022 JP 2022118092
(71) Applicant: DAIKIN INDUSTRIES, LTD., Osaka-shi, Osaka 530-0001 (JP)
(72) Inventor: TANAKA, Hiroyuki, Osaka-Shi, Osaka 530-0001 (JP)
(74) Representative: Hoffmann Eitle
(86) International application number: PCT/JP2023/026571
(87) International publication number: WO 2024/024618

(57) **Abstract**

Provided is a crosslinkable fluoroelastomer composition containing a fluoroelastomer containing bromine atom and/or iodine atom, a polyfunctional cross-linking aid, an organic peroxide, and at least one metal compound selected from the group consisting of magnesium oxide and a solid solution of aluminum oxide and magnesium oxide, wherein the content of the metal compound is 0.05 to 0.50 parts by mass based on 100 parts by mass of the fluoroelastomer.

## Description

### TECHNICAL FIELD

The present disclosure relates to a crosslinkable fluoroelastomer composition and a formed article.

### BACKGROUND ART

Patent Document 1 describes a fluoroelastomer-based composition for sealing materials, containing:
a fluoroelastomer that is a peroxide-crosslinkable copolymer having a fluorine content of 64 wt.% or more and a crosslinking site derived from a bromine-containing and/or iodine-containing compound, wherein the composition of the component units of the copolymer is
   (a) perfluoromethoxymethoxyethyl vinyl ether component units 0 to 25 mol%,
   (b) vinylidene fluoride component units 60 to 80 mol%,
   (c) tetrafluoroethylene component units 5 to 20 mol%,
   (d) hexafluoropropylene component units 0 to 10 mol%,
      and
   (e) small amount of brominated and/or iodinated unsaturated hydrofluorocarbon component units for crosslinking sites (total of (a) to (d) is 100 mol%)
      and,
2 parts by weight or more of a metal compound, 0.5 to 6 parts by weight of an organic peroxide, and 1 to 10 parts by weight of a polyfunctional monomer per 100 parts by weight of the fluoroelastomer.

Patent Document 2 describes a vulcanizable fluoroelastomer composition containing: (a) a tetrafluoroethylene/perfluoroalkyl vinyl ether copolymer, (b) an organic peroxide, (c) a co-cross-linking agent, and (d) hydrotalcite.

Patent Document 3 describes a fluoroelastomer composition obtained by compounding: (a) a peroxide-vulcanizable ternary fluoroelastomer, (b) a bituminous coal-based filler, (c) a hydrotalcite compound, (d) an organic peroxide, and (e) a co-cross-linking agent.

Patent Document 4 describes a fluoroelastomer composition used as a material for forming a fuel oil-based sealing material in contact with fuel oil, the composition containing: 100 parts by weight of a peroxide-crosslinkable tetrafluoroethylene/vinylidene fluoride/hexafluoropropene ternary copolymerized elastomer with a fluorine content of 64 wt.% or more, (A) 5 to 90 parts by weight of carbon black with a specific surface area of 5 to 20 m²/g, (B) 5 to 40 parts by weight of a bituminous fine powder, (C) 1 to 30 parts by weight of hydrophilicity-imparting talc and 1 to 20 parts by weight of at least one hydrophilicity-imparting clay, and (D) 0.5 to 6 parts by weight of an organic peroxide.

### RELATED ART

### PATENT DOCUMENTS

Patent Document 1: Japanese Patent Laid-Open No. 2004-217892
Patent Document 2: Japanese Patent Laid-Open No. 2000-053835
Patent Document 3: International Publication No. 2006/006468
Patent Document 4: International Publication No. 2012/137724

### SUMMARY OF THE INVENTION

### PROBLEM TO BE SOLVED BY THE INVENTION

An object of the present disclosure is to provide a crosslinkable fluoroelastomer composition that allows to obtain a formed article having excellent steam resistance, and allows to obtain a formed article that is less likely to corrode a metal member even when used in contact with the metal member.

### MEANS FOR SOLVING THE PROBLEM

According to the present disclosure, there is provided a crosslinkable fluoroelastomer composition containing a fluoroelastomer containing bromine atom and/or iodine atom, a polyfunctional cross-linking aid, an organic peroxide, and at least one metal compound selected from the group consisting of magnesium oxide and a solid solution of aluminum oxide and magnesium oxide, wherein the content of the metal compound is 0.05 to 0.50 parts by mass based on 100 parts by mass of the fluoroelastomer.

### EFFECTS OF INVENTION

According to the present disclosure, it is possible to provide a crosslinkable fluoroelastomer composition that allows to obtain a formed article having excellent steam resistance, and allows to obtain a formed article that is less likely to corrode a metal member even when used in contact with the metal member.

### DESCRIPTION OF EMBODIMENTS

Hereinafter, specific embodiments of the present disclosure will now be described in detail, but the present disclosure is not limited to the following embodiments.

Patent Document 1 describes a fluoroelastomer-based composition for sealing materials, containing a peroxide-crosslinkable copolymer having a crosslinking site derived from a bromine-containing and/or iodine-containing compound, and a metal compound. It also states that examples of the metal compound include calcium hydroxide, and that such metal compound is usually used in an amount of 2 parts by weight or more, preferably 5 to 15 parts by weight based on 100 parts by weight of the peroxide-crosslinkable (uncrosslinked) fluoroelastomer.

However, it has now been found that when the crosslinkable fluoroelastomer composition contains relatively large amounts of a metal compound such as calcium hydroxide as taught by Patent Document 1, the steam resistance of the formed article obtained from the crosslinkable fluoroelastomer composition will be inadequate. If the steam resistance of the formed article is inadequate, for example, when the formed article is used as a sealing material for sealing between metal members in a high-temperature steam environment, even if the corrosion of the metal member in contact with the formed article can be suppressed, the degradation of the formed article itself cannot be suppressed, which will cause the sealing performance of the formed article to be prematurely degraded.

After conducting diligent studies to solve this problem, it was found that by selecting magnesium oxide or a solid solution of aluminum oxide and magnesium oxide as the metal compound, and using these compounds in smaller quantities than what is considered conventional, surprisingly, it is possible to obtain a crosslinkable fluoroelastomer composition that allows to obtain a formed article having excellent steam resistance, and allows to obtain a formed article that is less likely to corrode a metal member even when used in contact with the metal member.

That is, according to the present disclosure, there is provided a crosslinkable fluoroelastomer composition containing a fluoroelastomer containing bromine atom and/or iodine atom, a polyfunctional cross-linking aid, an organic peroxide, and at least one metal compound selected from the group consisting of magnesium oxide and a solid solution of aluminum oxide and magnesium oxide, wherein the content of the metal compound is 0.05 to 0.50 parts by mass based on 100 parts by mass of the fluoroelastomer.

The following describes in detail each component.

### (Fluoroelastomer)

The crosslinkable fluoroelastomer composition of the present disclosure contains a fluoroelastomer. The fluoroelastomer in the present disclosure, is an amorphous fluoropolymer. The term "amorphous" means that a fluoropolymer has a melting peak (ΔH) of 4.5 J/g or lower as determined by differential scanning calorimetry (DSC) (temperature-increasing rate: 10°C/min) or differential thermal analysis (DTA) (temperature-increasing rate: 10°C/min). The fluoroelastomer exhibits elastomeric characteristics by being crosslinked. Elastomeric characteristics mean such characteristics that the polymer can be stretched, and retain its original length when the force required to stretch the polymer is no longer applied.

The fluoroelastomer may be a partially fluorinated elastomer or a perfluoroelastomer.

The partially fluorinated elastomer in the present disclosure, means a fluoropolymer containing a fluoromonomer unit, having a perfluoromonomer unit content of less than 90 mol% based on all polymerized units, having a glass transition temperature of 20°C or lower, and having a melting peak (ΔH) of 4.5 J/g or lower.

The perfluoroelastomer (perfluororubber) in the present disclosure, means a fluoropolymer having a perfluoromonomer unit content of 90 mol% or more, preferably 91 mol% or more based on all polymerized units, having a glass transition temperature of 20°C or lower, having a melting peak (ΔH) of 4.5 J/g or lower, and having a fluorine atom concentration in the fluoropolymer of 71 mass% or more, preferably 71.5 mass% or more. The fluorine atom concentration in the fluoropolymer in the present disclosure, is the concentration (mass%) of the fluorine atoms contained in the fluoropolymer calculated based on the type and content of each monomer constituting the fluoropolymer.

The perfluoromonomer in the present disclosure, means a monomer free from a carbon-hydrogen bond in the molecule. The perfluoromonomer may be a monomer containing carbon atoms and fluorine atoms in which some of the fluorine atoms bonded to any of the carbon atoms are replaced by chlorine atoms, and may be a monomer containing a nitrogen atom, an oxygen atom, a sulfur atom, a phosphorus atom, a boron atom, or a silicon atom in addition to the carbon atoms. The perfluoromonomer is preferably a monomer in which all hydrogen atoms are replaced by fluorine atoms. The perfluoromonomer does not encompass a monomer that provides a crosslinking site.

The monomer that provides a crosslinking site is a monomer (cure-site monomer) having a crosslinkable group that provides the fluoropolymer with a crosslinking site for forming a crosslink with the cross-linking agent.

In the present disclosure, a fluoroelastomer containing bromine atom and/or iodine atom is used. The fluoroelastomer used in the present disclosure is a fluoroelastomer containing bromine atom and/or iodine atom as a crosslinking site, and is a peroxide-crosslinkable fluoroelastomer.

When the fluoroelastomer contains iodine atoms, the iodine content is preferably 0.001 to 10 mass%, more preferably 0.01 mass% or more, preferably 0.1 mass% or more, and more preferably 5 mass% or less.

The fluoroelastomer may be a partially fluorinated elastomer or a perfluoroelastomer. The fluoroelastomer is preferably a partially fluorinated elastomer, and more preferably a peroxide-crosslinkable partially fluorinated elastomer, as it allows to obtain a formed article with even better steam resistance, and is also advantageous in terms of cost.

It is preferable that the partially fluorinated elastomer contains a monomer unit derived from at least one monomer selected from the group consisting of, for example, tetrafluoroethylene (TFE), vinylidene fluoride (VdF), and a perfluoroethylenically unsaturated compound (such as hexafluoropropylene (HFP) or perfluoro(alkyl vinyl ether) (PAVE)) represented by the general formula: CF₂=CF-Rf^{a}, wherein Rf^{a} is -CF₃ or -ORf^{b} (where Rf^{b} is a perfluoroalkyl group having 1 to 5 carbon atoms). Of these, the partially fluorinated elastomer preferably contains VdF units or TFE units.

Examples of the partially fluorinated elastomer include vinylidene fluoride (VdF)-based fluoroelastomers, tetrafluoroethylene (TFE)/propylene (Pr)-based fluoroelastomers, tetrafluoroethylene (TFE)/propylene/vinylidene fluoride (VdF)-based fluoroelastomers, ethylene/hexafluoropropylene (HFP)-based fluoroelastomers, ethylene/hexafluoropropylene (HFP)/vinylidene fluoride (VdF)-based fluoroelastomers, and ethylene/hexafluoropropylene (HFP)/tetrafluoroethylene (TFE)-based fluoroelastomers. Of these, the partially fluorinated elastomer is preferably at least one selected from the group consisting of vinylidene fluoride-based fluoroelastomers and tetrafluoroethylene/propylene-based fluoroelastomers.

The fluoroelastomer is preferably at least one selected from the group consisting of vinylidene fluoride-based fluoroelastomers, tetrafluoroethylene/propylene-based fluoroelastomers, and perfluoroelastomers, and more preferably at least one selected from the group consisting of vinylidene fluoride-based fluoroelastomers and tetrafluoroethylene/propylene-based fluoroelastomers, as it allows to obtain a formed article with even better steam resistance.

The vinylidene fluoride-based fluoroelastomer is preferably a copolymer consisting of 45 to 85 mol% vinylidene fluoride and 55 to 15 mol% of at least one further monomer copolymerizable with vinylidene fluoride, and more preferably a copolymer consisting of 50 to 80 mol% vinylidene fluoride and 50 to 20 mol% of at least one further monomer copolymerizable with vinylidene fluoride.

Examples of the at least one further monomer copolymerizable with vinylidene fluoride include monomers such as tetrafluoroethylene (TFE), hexafluoropropylene (HFP), fluoroalkyl vinyl ethers, chlorotrifluoroethylene (CTFE), trifluoroethylene, trifluoropropylene, pentafluoropropylene, trifluorobutene, tetrafluoroisobutene, hexafluoroisobutene, vinyl fluoride, a fluoromonomer represented by the general formula (100): CHX¹⁰¹=CX¹⁰²Rf¹⁰¹ (wherein one of X¹⁰¹ and X¹⁰² is H and the other is F, and Rf¹⁰¹ is a linear or branched fluoroalkyl group having 1 to 12 carbon atoms), a fluoromonomer represented by the general formula (170): CH₂=CH-(CF₂)ₙ-X¹⁷¹ (wherein X¹⁷¹ is H or F, and n is an integer of 3 to 10), and a monomer that provides a crosslinking site; and non-fluorinated monomers such as ethylene, propylene, and alkyl vinyl ethers. These may be used alone or in any combination thereof.

The fluoroalkyl vinyl ether is preferably perfluoro(methyl vinyl ether) or perfluoro(propyl vinyl ether), and more preferably perfluoro(methyl vinyl ether). These can be used singly or in any combination.

The fluoromonomer represented by the general formula (100) is preferably 2,3,3,3-tetrafluoropropylene or 1,3,3,3-tetrafluoropropylene, and more preferably 2,3,3,3-tetrafluoropropylene.

Of these, the at least one further monomer copolymerizable with vinylidene fluoride is preferably at least one selected from the group consisting of TFE, HFP, fluoroalkyl vinyl ether, CTFE, and the fluoromonomers represented by the general formula (100), and is more preferably at least one selected from the group consisting of TFE, HFP, fluoroalkyl vinyl ether, and 2,3,3,3-tetrafluoropropylene.

Specific examples of the vinylidene fluoride-based fluoroelastomers include VdF/HFP-based rubber, VdF/HFP/TFE-based rubber, VdF/CTFE-based rubber, VdF/CTFE/TFE-based rubber, rubber based on VDF and a fluoromonomer represented by the general formula (100), rubber based on VDF, a fluoromonomer represented by the general formula (100), and TFE, rubber based on VDF and perfluoro(methyl vinyl ether) (PMVE), VDF/PMVE/TFE-based rubber, and VDF/PMVE/TFE/HFP-based rubber. Of these, at least one copolymer selected from the group consisting of VdF/HFP-based elastomers, VdF/HFP/TFE-based elastomers, and VdF/2,3,3,3-tetrafluoropropylene-based elastomers.

The VdF/HFP-based elastomer has a VdF/HFP molar ratio of preferably 45 to 85/55 to 15, more preferably 50 to 80/50 to 20, and still more preferably 60 to 80/40 to 20.

The VdF/HFP/TFE-based elastomer has a VdF/HFP/TFE molar ratio of preferably 40 to 80/10 to 35/10 to 35.

The VdF/2,3,3,3-tetrafluoropropylene-based elastomer has a VdF/2,3,3,3-tetrafluoropropylene molar ratio of preferably 45 to 85/55 to 15, more preferably 50 to 80/50 to 20, and still more preferably 60 to 80/40 to 20.

The tetrafluoroethylene/propylene-based fluoroelastomer is preferably a copolymer containing 45 to 70 mol% of tetrafluoroethylene, 55 to 30 mol% of propylene, and 0 to 5 mol% of a fluoromonomer that provides a crosslinking site.

The perfluoroelastomer is preferably at least one selected from the group consisting of perfluoroelastomers containing TFE, such as a copolymer containing TFE and a fluoromonomer represented by the general formula (11), (12), or (13) and a copolymer containing TFE, a fluoromonomer represented by the general formula (11), (12), or (13), and a monomer that provides a crosslinking site.

A fluoromonomer represented by the general formula (11): CF₂=CF-ORf¹¹¹
wherein Rf¹¹¹ represents a perfluoroalkyl group having 1 to 10 carbon atoms, is preferred. Rf¹¹¹ is preferably a perfluoroalkyl group having 1 to 5 carbon atoms.

A fluoromonomer represented by the general formula (12): CF₂=CFOCF₂ORf¹²¹
wherein Rf¹²¹ is a linear or branched perfluoroalkyl group having 1 to 6 carbon atoms, a cyclic perfluoroalkyl group having 5 to 6 carbon atoms, or a linear or branched perfluorooxyalkyl group having 2 to 6 carbon atoms and containing 1 to 3 oxygen atoms

A fluoromonomer represented by the general formula (13): CF₂=CFO(CF₂CF(Y¹³¹)O)ₘ(CF₂)ₙF
wherein Y¹³¹ represents a fluorine atom or a trifluoromethyl group; m is an integer of 1 to 4; and n is an integer of 1 to 4

The fluoromonomer represented by the general formula (11) is preferably at least one selected from the group consisting of perfluoro(methyl vinyl ether), perfluoro(ethyl vinyl ether), and perfluoro(propyl vinyl ether), and is more preferably at least one selected from the group consisting of perfluoro(methyl vinyl ether) and perfluoro(propyl vinyl ether).

The fluoromonomer represented by the general formula (12) is preferably at least one selected from the group consisting of CF₂=CFOCF₂OCF₃, CF₂=CFOCF₂OCF₂CF₃, and CF₂=CFOCF₂OCF₂CF₂OCF₃.

The fluoromonomer represented by the general formula (13) is preferably at least one selected from the group consisting of CF₂=CFOCF₂CF(CF₃)O(CF₂)₃F, CF₂=CFO(CF₂CF(CF₃)O)₂(CF₂)₃F, and CF₂=CFO(CF₂CF(CF₃)O)₂(CF₂)₂F.

The composition of the TFE/PMVE copolymer is preferably 45 to 90/10 to 55 (mol%), more preferably 55 to 80/20 to 45, and further preferably 55 to 70/30 to 45.

The composition of the copolymer of TFE/PMVE/monomer that provides a crosslinking site is preferably 45 to 89.9/10 to 54.9/0.01 to 4 (mol%), more preferably 55 to 77.9/20 to 49.9/0.1 to 3.5, and further preferably 55 to 69.8/30 to 44.8/0.2 to 3.

The composition of the copolymer of TFE and a fluoromonomer represented by the general formula (11), (12), or (13) having 4 to 12 carbon atoms is preferably 50 to 90/10 to 50 (mol%), more preferably 60 to 88/12 to 40, and still more preferably 65 to 85/15 to 35.

The composition of the copolymer of TFE, a fluoromonomer represented by the general formula (11), (12), or (13) having 4 to 12 carbon atoms, and a monomer that provides a crosslinking site is preferably 50 to 89.9/10 to 49.9/0.01 to 4 (mol%), more preferably 60 to 87.9/12 to 39.9/0.1 to 3.5, and still more preferably 65 to 84.8/15 to 34.8/0.2 to 3.

When these copolymers have compositional features outside these ranges, the properties as a rubber elastic body are lost, and the properties tend to be close to those of a resin.

The perfluoroelastomer is preferably at least one selected from the group consisting of copolymers of TFE, a fluoromonomer represented by the general formula (13), and a fluoromonomer that provides a crosslinking site, copolymers of TFE and a perfluorovinyl ether represented by the general formula (13), copolymers of TFE and a fluoromonomer represented by the general formula (11), and copolymers of TFE, a fluoromonomer represented by the general formula (11), and a monomer that provides a crosslinking site.

Examples of the perfluoroelastomer further include the perfluoroelastomers disclosed in documents such as International Publication No. WO97/24381, Japanese Patent Publication No. 61-57324, Japanese Patent Publication No. 04-8118, and Japanese Patent Publication No. 05-13961.

The fluoroelastomer also preferably consists of a copolymer containing polymerized units derived from monomers that provide a crosslinking site. Examples of monomers providing a crosslinking site include iodine-containing monomers such as perfluoro(6,6-dihydro-6-iodo-3-oxa-1-hexene) and perfluoro(5-iodo-3-oxa-1-pentene) as described in Japanese Patent Publication No. 05-63482 and Japanese Patent Laid-Open No. 07-316234, bromine-containing monomers as described in Japanese Translation of PCT International Application Publication No. 1992-505341, cyano group-containing monomers, carboxyl group-containing monomers and alkoxycarbonyl group-containing monomers as described in Japanese Translation of PCT International Application Publication No. 1992-505345 and Japanese Translation of PCT International Application Publication No. 1993-500070.

The fluoroelastomer is preferably obtained by using a chain transfer agent during polymerization. The above chain transfer agent to be used may be a bromine compound or an iodine compound. Examples of a polymerization method performed using a bromine compound or an iodine compound include a method in which emulsion polymerization is carried out in an aqueous medium under pressure in the presence of the bromine compound or the iodine compound in a substantially oxygen-free state (iodine transfer polymerization method). Representative examples of the bromine compound or iodine compound used include a compound represented by General formula:

R²IₓBr_{y}

wherein x and y are each independently an integer of 0 to 2 and satisfy 1 ≤ x+y ≤ 2, and R² is a saturated or unsaturated fluorohydrocarbon group or chlorofluorohydrocarbon group having 1 to 16 carbon atoms, or a hydrocarbon group having 1 to 3 carbon atoms, and may contain an oxygen atom. By using a bromine compound or an iodine compound, iodine or bromine is introduced into the polymer to function as a cross-linking point.

The fluorine content of the fluoroelastomer is preferably 55 to 73 mass%, more preferably 61 mass% or more, still more preferably 63 mass% or more, further still more preferably 65 mass% or more, particularly preferably 67 mass% or more, most preferably 69 mass% or more, and more preferably less than 71 mass%, as it allows to obtain a formed article having even better steam resistance, and that is even less likely to corrode a metal member. The fluorine content of the fluoroelastomer can be determined by calculation from the compositional feature of the fluoroelastomer measured by ¹⁹F-NMR.

The Mooney viscosity at 100°C (ML 1+10 (100°C)) of the fluoroelastomer is preferably 2 or more, more preferably 5 or more, and still more preferably 10 or more. It is preferably 200 or lower, more preferably 120 or lower, still more preferably 100 or lower, and particularly preferably 80 or lower. The Mooney viscosity is a value measured according to ASTM D1646-15 and JIS K6300-1:2013.

### (Metal compound)

In the present disclosure, at least one selected from the group consisting of magnesium oxide and a solid solution of aluminum oxide and magnesium oxide is used as a metal compound. If a metal compound other than these, for example, a metal compound such as calcium hydroxide or hydrotalcite, is used, it may not be possible to obtain a formed article with excellent steam resistance or a formed article with excellent compression set characteristics. Magnesium oxide, like calcium hydroxide, is known to have hygroscopic properties. While this could not be predicted based on such common technical knowledge, it became clear that a formed article with excellent steam resistance could be obtained by using magnesium oxide and a solid solution containing magnesium oxide.

In addition, in the present disclosure, the content of at least one selected from the group consisting of magnesium oxide and a solid solution of aluminum oxide and magnesium oxide is within the range of 0.05 to 0.50 parts by mass based on 100 parts by mass of the fluoroelastomer. Even if at least one selected from the group consisting of magnesium oxide and a solid solution of aluminum oxide and magnesium oxide is used as the metal compound, the desired effect cannot be obtained if the content is outside the above numerical range. If the content of the metal compound in the crosslinkable fluoroelastomer composition is too low, it will be difficult to obtain a formed article that is less likely to corrode a metal member. If the content of the metal compound in the crosslinkable fluoroelastomer composition is too high, it will be difficult to obtain a formed article with excellent steam resistance, and the compression set of the resulting formed article may become too high.

The content of the metal compound in the crosslinkable fluoroelastomer composition is preferably 0.40 parts by mass or less, more preferably 0.30 parts by mass or less, still more preferably 0.20 parts by mass or less, further still more preferably 0.15 parts by mass or less, and particularly preferably 0.11 parts by mass or less based on 100 parts by mass of the fluoroelastomer, as it allows to obtain a formed article having even better steam resistance, and that is even less likely to corrode a metal member.

When the crosslinkable fluoroelastomer composition contains magnesium oxide as the metal compound, the content of magnesium oxide is preferably 0.06 parts by mass or more, more preferably 0.07 parts by mass or more, still more preferably 0.08 parts by mass or more, further still more preferably 0.09 parts by mass or more, and preferably 0.40 parts by mass or less, more preferably 0.30 parts by mass or less, still more preferably 0.20 parts by mass or less, further still more preferably 0.15 parts by mass or less, particularly preferably 0.11 parts by mass or less based on 100 parts by mass of the fluoroelastomer, as it allows to obtain a formed article having even better steam resistance, and that is even less likely to corrode a metal member.

When the crosslinkable fluoroelastomer composition contains a solid solution as the metal compound, the content of the solid solution is preferably 0.40 parts by mass or less, more preferably 0.30 parts by mass or less, still more preferably 0.20 parts by mass or less, further still more preferably 0.15 parts by mass or less, and particularly preferably 0.11 parts by mass or less, based on 100 parts by mass of the fluoroelastomer, as it allows to obtain a formed article having even better steam resistance, and that is even less likely to corrode a metal member.

The solid solution of aluminum oxide and magnesium oxide can have a chemical composition represented by, for example, the following formula:

(Mg₁₋ₓAlₓ)O_{1+0.5x}

wherein 0<x<0.4.

For example, the solid solution of aluminum oxide and magnesium oxide can have a chemical composition represented by Mg_{0.7}Al_{0.3}O_{1.15}.

Solid solutions are usually distinguished from anion-containing hydrotalcite compounds in that they do not contain anions.

The aluminum oxide (Al₂O₃) content in the solid solution is, for example, 10 to 40 mass% based on the mass of the solid solution. In addition, the magnesium oxide (MgO) content in the solid solution is, for example, 90 to 60 mass% based on the mass of the solid solution.

### (Cross-linking agent)

In the present disclosure, an organic peroxide is used as a cross-linking agent.

The organic peroxide is not limited as long as it is a cross-linking agent normally used for peroxide cross-linking, and in general, those that readily produce peroxy radicals in the presence of heat and a redox system are suitable. Specific examples include 1,1-bis(t-butylperoxy)-3,5,5-trimethylcyclohexane, 2,5-dimethylhexane-2,5-dihydroperoxide, di-t-butyl peroxide, t-butyl cumyl peroxide, dicumyl peroxide, α,α'-bis(t-butylperoxy)-p-diisopropylbenzene, 2,5-dimethyl-2,5-bis(t-butylperoxy)hexane, 2,5-dimethyl-2,5-bis(t-butylperoxy)-hexyne-3, benzoyl peroxide, t-butyl peroxybenzene, 2,5-dimethyl-2,5-di(benzoylperoxy)hexane, t-butyl peroxymaleate, t-butyl peroxyisopropyl carbonate, and t-butyl peroxybenzoate. Of these, 2,5-dimethyl-2,5-bis(t-butylperoxy)hexane and 2,5-dimethyl-2,5-bis(t-butylperoxy)-hexyne-3 are preferred.

The content of organic peroxide is preferably 0.05 to 10 parts by mass and more preferably 1.0 to 5 parts by mass based on 100 parts by mass of the fluoroelastomer.

### (Polyfunctional cross-linking aid)

The crosslinkable fluoroelastomer composition of the present disclosure further contains a polyfunctional cross-linking aid.

Examples of the polyfunctional cross-linking aid include triallyl cyanurate, trimethallyl isocyanurate, triallyl isocyanurate (TAIC), triacrylformal, triallyl trimellitate, N,N'-m-phenylene bismaleimide, dipropagil terephthalate, diallyl phthalate, tetraallyl terephthalate amide, triallyl phosphate, bismaleimide, fluorinated triallyl isocyanurate (1,3,5-tris(2,3,3-trifluoro-2-propenyl)-1,3,5-triazine-2,4,6-trione), tris(diallylamine)-S-triazine, triallyl phosphite, N,N-diallylacrylamide, 1,6-divinyldodecafluorohexane, hexaallyl phosphoramide, N,N,N',N'-tetraallyl phthalamide, N,N,N',N'-tetraallyl malonamide, trivinyl isocyanurate, 2,4,6-trivinylmethyltrisiloxane, tri(5-norbornene-2-methylene)cyanurate, and triallyl phosphite. The polyfunctional cross-linking aid is preferably a compound having 2 to 4 unsaturated functional groups and a nitrogen-containing heterocycle, more preferably at least one compound selected from the group consisting of triallyl isocyanurate and trimethallyl isocyanurate, and still more preferably triallyl isocyanurate (TAIC). When kneading the fluoroelastomer with a polyfunctional cross-linking aid, a polyfunctional cross-linking aid impregnated with an inert inorganic powder or the like may be used.

The content of polyfunctional cross-linking aid is preferably 0.1 to 10 parts by mass and more preferably 0.5 to 5 parts by mass based on 100 parts by mass of the fluoroelastomer.

### (Other Components)

The crosslinkable fluoroelastomer composition of the present disclosure may or may not contain an acid acceptor, as long as the desired effects exhibited by the crosslinkable fluoroelastomer composition of the present disclosure are not impaired. Examples of the acid acceptor include metal oxides such as calcium oxide, hydrotalcite, bismuth oxide, and zinc oxide; metal hydroxides such as calcium hydroxide; alkali metal silicates disclosed in Japanese Translation of PCT International Application Publication No. 2011-522921 such as sodium metasilicate; and metal salts of weak acids disclosed in Japanese Patent Laid-Open No. 2003-277563. Examples of the metal salt of weak acid include carbonates, benzoates, oxalates, and phosphites of Ca, Sr, Ba, Na, and K.

The acid acceptor is preferably at least one selected from the group consisting of metal oxides (except magnesium oxide and a solid solution of aluminum oxide and magnesium oxide), metal hydroxides, alkali metal silicates, hydrotalcite, and weak acid metal salts.

In one embodiment of the crosslinkable fluoroelastomer composition of the present disclosure, at least one metal compound (except magnesium oxide and a solid solution of aluminum oxide and magnesium oxide) selected from the group consisting of alkali metals, oxides of alkali metals, hydroxides of alkali metals, salts of alkali metals, alkaline earth metals, oxides of alkaline earth metals, hydroxides of alkaline earth metals, and salts of alkaline earth metals is contained or not, and the content of the metal compound is 0 to 1 part by mass based on 100 parts by mass of the fluoroelastomer. When the crosslinkable fluoroelastomer composition of the present disclosure is provided with such composition, the steam resistance of the resulting formed article tends to be further improved. The content of the metal compound is preferably 0.5 parts by mass or less, more preferably 0.1 parts by mass or less, and particularly preferably, the metal compound is not contained.

In one embodiment of the crosslinkable fluoroelastomer composition of the present disclosure, an acid acceptor such as calcium hydroxide, magnesium oxide, or hydrotalcite (except magnesium oxide and a solid solution of aluminum oxide and magnesium oxide) is contained or not, and the content of the acid acceptor is 0 to 1 part by mass based on 100 parts by mass of the fluoroelastomer. When the crosslinkable fluoroelastomer composition of the present disclosure is provided with such composition, the steam resistance of the resulting formed article tends to be further improved. The content of the acid acceptor (except magnesium oxide and a solid solution of aluminum oxide and magnesium oxide) is preferably 0.5 parts by mass or less, more preferably 0.1 parts by mass or less, and particularly preferably, the acid acceptor is not contained.

The crosslinkable fluoroelastomer composition of the present disclosure may contain a variety of additives, such as usual additives to be compounded in a crosslinkable fluoroelastomer composition as required, such as fillers (carbon black, bituminous coal, barium sulfate, diatomaceous earth, calcined clay, talc and the like), processing aids (wax and the like), plasticizers, colorants, stabilizers, tackifiers (cumarone resins, cumarone indene resins and the like), mold release agents, electroconductivity imparting agents, thermal conductivity imparting agents, surface non-adhesive agents, softness imparting agents, heat resistance improvers, flame retarders, foaming agents, and antioxidants as described in International Publication No. WO 2012/023485, and may contain one or more common cross-linking agents, crosslinking accelerators different from those described above.

Examples of fillers include metal oxides such as titanium oxide and aluminum oxide; metal hydroxides such as magnesium hydroxide and aluminum hydroxide; carbonates such as magnesium carbonate, aluminum carbonate, calcium carbonate, and barium carbonate; silicates such as magnesium silicate, calcium silicate, and aluminum silicate; sulfates such as aluminum sulfate, calcium sulfate, and barium sulfate; metal sulfides such as molybdenum disulfide, iron sulfide, and copper sulfide; diatomaceous earth, asbestos, lithopone (zinc sulfide/barium sulfide), graphite, fluorocarbon, calcium fluoride, coke, quartz fine powder, talc, mica powder, wollastonite, carbon fiber, aramid fiber, various whiskers, glass fiber, organic reinforcing agents, organic fillers, polytetrafluoroethylene, fluorine-containing thermoplastic resin, mica, silica, cerite, and clay.

The content of the filler such as carbon black is not limited, and is preferably 0 to 300 parts by mass, more preferably 1 to 150 parts by mass, even more preferably 2 to 100 parts by mass, and particularly preferably 2 to 75 parts by mass based on 100 parts by mass of the fluoroelastomer.

The content of the processing aid such as wax is preferably 0 to 10 parts by mass and more preferably 0 to 5 parts by mass based on 100 parts by mass of the fluoroelastomer. When a processing aid, a plasticizer, and a mold release agent are used, the mechanical properties and the sealability of the resulting formed article tend to be impaired, and thus the contents thereof need to be adjusted such that the characteristics of the intended formed article to be obtained are acceptable.

The crosslinkable fluoroelastomer composition of the present disclosure may contain a dialkyl sulfone compound. Examples of the dialkyl sulfone compound include dimethyl sulfone, diethyl sulfone, dibutyl sulfone, methyl ethyl sulfone, diphenyl sulfone, and sulfolane. The content of the dialkyl sulfone compound is preferably 0 to 10 parts by mass, more preferably 0 to 5 parts by mass, and particularly preferably 0 to 3 parts by mass based on 100 parts by mass of the fluoroelastomer. In a case where the crosslinkable fluoroelastomer composition of the present disclosure contains a dialkylsulfone compound, the lower limit of the content of the dialkylsulfone compound may be, for example, 0.1 parts by mass or more based on 100 parts by mass of the fluoroelastomer.

The crosslinkable fluoroelastomer composition of the present disclosure is obtained by kneading a fluoroelastomer, a metal compound, an organic peroxide, a polyfunctional cross-linking aid, a filler, and the like by using a rubber kneading machine generally used. As the rubber kneading machine, there can be used a roll, a kneader, a Banbury mixer, an internal mixer, a twin-screw extruder or the like.

The crosslinkable fluoroelastomer composition of the present disclosure can be suitably used to obtain a formed article that comes into contact with one or both of steam and hot water. Therefore, the present disclosure relates to a crosslinkable fluoroelastomer composition which is used to form a formed article that comes into contact with one or both of steam and hot water, and more specifically, the present disclosure also relates to a use of the crosslinkable fluoroelastomer composition to obtain a formed article in which changes in volume when in contact with one or both of steam and hot water are suppressed.

### (Formed article)

A formed article can be obtained by crosslinking the crosslinkable fluoroelastomer composition of the present disclosure.

The method for crosslinking the crosslinkable fluoroelastomer composition of the present disclosure may be a commonly used method such as press crosslinking, steam crosslinking, and oven crosslinking, as well as a crosslinking reaction performed under any conditions, under normal pressure, increased pressure, reduced pressure, and in air. The crosslinking conditions are suitably determined according to the type of a crosslinking agent to be used, heating is usually performed within a temperature range of 150 to 300°C and a range of 1 min to 24 hr. In the case of press and steam crosslinking, it is preferably performed within a temperature range of 150 to 180°C, and the crosslinking time may be at least up to the crosslinking time T90, for example, a range of 1 min to 2 hr. In the case of subsequent (after press or steam crosslinking) oven crosslinking, it is preferably performed within a temperature range of 170°C and 250°C, but not necessarily, and the crosslinking time for oven crosslinking is preferably, for example, 0 to 48 hours.

The formed article may be obtained by forming the crosslinkable fluoroelastomer composition of the present disclosure. Forming can be performed by a conventionally known method, such as compression molding, injection molding, extrusion forming, and calendering.

Examples of the usage of the formed article include various sealing materials and packings, such as rings, packings, gaskets, diaphragms, oil seals, bearing seals, lip seals, plunger seals, door seals, lip and face seals, gas delivery plate seals, wafer support seals, and barrel seals. The formed article as a sealing material can be used in applications where excellent heat resistance, solvent resistance, chemical resistance, and non-stickiness are required.

Also, the formed article can be used as a tube, a hose, a roll, various types of rubber roll, a flexible joint, a rubber plate, a coating, a belt, a damper, a valve, a valve seat, a valve body, a chemical resistant coating material, a laminating material, a lining material, and the like.

The cross-sectional shape of the ring, packing, and seal may be any of various shapes, and, specifically, it may be, for example, a square shape, an O-shape, or a ferrule, or may be an irregular shape such as a D-shape, an L-shape, a T-shape, a V-shape, an X-shape, or a Y-shape.

In particular, the formed article obtained by forming the crosslinkable fluoroelastomer composition of the present disclosure has excellent steam resistance, and can be suitably used as a formed article that comes into contact with one or both of steam and hot water, as it is less likely to corrode a metal member even when used in contact with the metal member.

One embodiment of the formed article of the present disclosure has a contact surface that comes into contact with one or both of steam and hot water, and at least the contact surface is composed of a formed article obtained by crosslinking the crosslinkable fluoroelastomer composition. That is, of the formed articles that come into contact with one or both of steam and hot water, the formed article obtained from the crosslinkable fluoroelastomer composition can be used to form at least the contact surface that comes into contact with one or both of steam and hot water.

The formed article that comes into contact with one or both of steam and hot water includes formed articles that may come into contact with one or both of steam and hot water (e.g., containers, hoses, seals, and gaskets), during standard use. Examples of these formed articles include formed articles used in boilers, turbines, steam cleaners, hot water cleaners, and the like (e.g., containers, hoses, seals, and gaskets).

While embodiments have been described above, it will be understood that various changes in form and detail can be made without departing from the gist and scope of the claims.
<1> According to a first aspect of the present disclosure,
   provided is a crosslinkable fluoroelastomer composition containing:
   a fluoroelastomer containing bromine atom and/or iodine atom,
   a polyfunctional cross-linking aid,
   an organic peroxide, and
   at least one metal compound selected from the group consisting of magnesium oxide and a solid solution of aluminum oxide and magnesium oxide,
   wherein the content of the metal compound is 0.05 to 0.50 parts by mass based on 100 parts by mass of the fluoroelastomer
<2> According to a second aspect of the present disclosure,
   provided is the crosslinkable fluoroelastomer composition according to the first aspect, wherein the fluoroelastomer is at least one selected from the group consisting of a vinylidene fluoride-based fluoroelastomer, a tetrafluoroethylene/propylene-based fluoroelastomer, and a perfluoroelastomer.
<3> According to a third aspect of the present disclosure,
   provided is the crosslinkable fluoroelastomer composition according to the first or second aspect, wherein the content of the organic peroxide is 0.05 to 10 parts by mass based on 100 parts by mass of the fluoroelastomer.
<4> According to a fourth aspect of the present disclosure,
   provided is the crosslinkable fluoroelastomer composition according to any of the first to the third aspect, wherein the content of the polyfunctional cross-linking aid is 0.1 to 10 parts by mass based on 100 parts by mass of the fluoroelastomer.
<5> According to a fifth aspect of the present disclosure,
   provided is a formed article obtained by crosslinking the crosslinkable fluoroelastomer composition according to any of the first to the fourth aspect.

### EXAMPLES

Next, embodiments of the present disclosure will now be described by way of Examples, but the present disclosure is not limited only to the Examples.

Various numerical values in the Examples were measured by the following methods.

### <Monomer compositional feature of fluoroelastomer>

Measurements were performed using ¹⁹F-NMR (manufactured by Bruker, AC300P).

### <Content of iodine>

An absorbing solution was prepared by mixing Na₂CO₃ and K₂CO₃ at a 1:1 ratio (weight ratio), and dissolving the resulting mixture in 20 ml of pure water. 12 mg of a sample (fluoroelastomer) was mixed with 5 mg of Na₂SO₃ to prepare a mixture, which was combusted in oxygen in a quartz flask, and the combustion gas generated was introduced into the absorbing solution. After allowing the resulting absorbing solution to stand for 30 minutes, the concentration of iodine ions in the absorbent solution was measured using a Shimadzu 20A ion chromatograph. The content of iodine ions was determined using a calibration curve prepared using KI standard solutions containing 0.5 ppm and 1.0 ppm of iodine ions.

### <Mooney viscosity>

The Mooney viscosity was measured according to ASTM D1646-15 and JIS K6300-1:2013. The measurement temperature was 100°C.

### <Heat of fusion>

Using a differential scanning calorimeter (DSC822e, manufactured by Mettler Toledo, or X-DSC7000, manufactured by Hitachi High-Tech Science Corporation), 10 mg of a sample was heated at 20°C/min to obtain a DSC curve, and from a magnitude of a melting peak (ΔH) appearing in the DSC curve, a heat of fusion was calculated.

### <100% modulus, tensile strength and elongation at break>

A test piece having a dumbbell No. 6 shape was prepared using a crosslinked sheet of 2 mm in thickness. The 100% modulus (M100), the tensile strength (TB) and the elongation at break (EB) at 23°C were measured by using the obtained test piece and a tensile tester (manufactured by A&D Co., Ltd., Tensilon RTG-1310) according to JIS K6251:2010 under the condition of 500 mm/min.

### <Shore hardness (HS)>

The hardness (peak value) was measured according to JIS K6253-3:2012 using three stacked sheets of cross-linked sheets of 2 mm in thickness and a type A durometer.

### <Compression set (CS)>

The compression set was measured using a small test piece for measurement of compression set (P-24, O-ring) according to method A of JIS K6262:2013 under the conditions of a compression ratio of 25%, a test temperature of 200°C, and a test time of 70 hours.

### <Corrosion test>

A crosslinked sheet of 2 mm in thickness was sandwiched between two SUS304 metal plates and pressure was applied from both sides to compress the crosslinked sheet at a compression ratio of 10% before placing it in a steam vulcanizing can. The metal plates with the crosslinked sheet sandwiched between them were exposed to steam in the steam vulcanizing can under the conditions of 170°C, 6.9 MPa, and 70 hours. The metal plates with the crosslinked sheet sandwiched between them were removed from the steam vulcanizing can. The surface of the metal plate on the portion where the metal plate and the crosslinked sheet were pressing against each other was visually observed, and evaluated according to the following criteria.

### (Evaluation of corrosivity)

Poor: Loss of luster.

Acceptable: Luster is remaining, but many areas are discolored.

Good: Luster is remaining, but a few areas are discolored.

Excellent: Luster is remaining and no discoloration is observed.

### <Steam resistance>

A 20 mm long, 20 mm wide and 2 mm thick crosslinked sheet was placed in a steam vulcanizing can. The crosslinked sheet was exposed to steam in the steam vulcanizing can under the conditions of 170°C, 6.9 MPa, and 70 hours. The crosslinked sheet was removed from the steam vulcanizing can and the 100% modulus (M100), tensile strength (TB), elongation at break (EB), and Shore hardness (HS) at 23°C were measured by the method described above.

The specific gravity and mass of the crosslinked sheet were measured by using the crosslinked sheet before and after being exposed to steam, and the rate of volume change was calculated according to the following formula. The specific gravity was measured using an automatic specific gravity meter DMA-220H (manufactured by Shinko Denshi Co., Ltd.).

Rate of volume change (%) = {[(mass of cross-linked sheet after immersion)/(specific gravity of cross-linked sheet after immersion)] - [(mass of cross-linked sheet before immersion)/(specific gravity of cross-linked sheet before immersion)]}/[(mass of cross-linked sheet before immersion)/(specific gravity of cross-linked sheet before immersion)] × 100

The following materials were used in Examples and Comparative Examples.

### Fluoroelastomer A

Vinylidene fluoride/tetrafluoroethylene/hexafluoropropylene copolymer
Vinylidene fluoride/tetrafluoroethylene/hexafluoropropylene: 50/20/30 (molar ratio)
   Iodine content: 0.25 mass%
   Mooney viscosity (ML 1+10 (100°C)): 50
   Heat of fusion: not observed in second run

### Fluoroelastomer B

Vinylidene fluoride/tetrafluoroethylene/perfluoro(methyl vinyl ether) copolymer
Vinylidene fluoride/tetrafluoroethylene/perfluoro(methyl vinyl ether): 75/7/18 (molar ratio)
   Iodine content: 0.32 mass%
   Mooney viscosity (ML 1+10 (100°C)): 68
   Heat of fusion: not observed in second run

### Fluoroelastomer C

Tetrafluoroethylene/perfluoro(methyl vinyl ether) copolymer
Tetrafluoroethylene/perfluoro(methyl vinyl ether): 62.5/37.5 (molar ratio)
   Iodine content: 0.55 mass%
   Mooney viscosity (ML 1+10 (100°C)): 65
   Heat of fusion: not observed in second run
Carbon black: MT carbon (N₂SA = 8 m²/g, DBP oil absorption = 43 ml/100 g)
Polyfunctional cross-linking aid: Triallyl Isocyanurate Organic peroxide: 2,5-Dimethyl-2,5-bis(t-butylperoxy)hexane
Additive-A: Calcium hydroxide (NICC5000 manufactured by Inoue Calcium Corporation)
Additive-B: Hydrotalcite (DHT-4A manufactured by Kyowa Chemical Industry Co. Ltd.)
Additive-C: Magnesium oxide (Kyowamag 150 manufactured by Kyowa Chemical Industry Co. Ltd.)
Additive-D: Solid solution of aluminum oxide and magnesium oxide (KW-2200 manufactured by Kyowa Chemical Industry Co. Ltd.) (MgO/Al₂O₃ = 59.5/34.5 (mass ratio))

### Comparative Examples 1 to 6 and Examples 1 to 21

Respective components were compounded according to the formulation in Table 1, and kneaded on an open roll to thereby prepare crosslinkable fluoroelastomer compositions. The resulting crosslinkable fluoroelastomer compositions were crosslinked by being pressed at 160°C for 30 minutes, and then further heated in an oven at 180°C for 4 hours to obtain crosslinked sheets (2 mm thick). The evaluation results of the resulting crosslinked sheets are shown in Tables 1 to 3.

### [Table 1-1]

**Table 1-1**

| | | | Comparative Example 1 | Comparative Example 2 | Comparative Example 3 | Comparative Example 4 | Example 1 | Example 2 | Example 3 | Example 4 | Example 5 |
|---|---|---|---|---|---|---|---|---|---|---|---|
| Compounding | | | | | | | | | | | |
| | Fluoroelastomer A | parts by mass | 100 | 100 | 100 | 100 | 100 | 100 | 100 | 100 | 100 |
| | Carbon black | parts by mass | 30 | 30 | 30 | 30 | 30 | 30 | 30 | 30 | 30 |
| | Polyfunctional cross-linking aid | parts by mass | 3 | 3 | 3 | 3 | 3 | 3 | 3 | 3 | 3 |
| | Organic peroxide | parts by mass | 1 | 1 | 1 | 1 | 1 | 1 | 1 | 1 | 1 |
| | Additive-A | parts by mass | - | 1 | - | - | - | - | - | - | - |
| | Additive-B | parts by mass | - | - | 0.5 | - | - | - | - | - | |
| | Additive-C | parts by mass | - | - | - | 1 | 0.500 | 0.250 | 0.200 | 0.125 | 0.100 |
| | Additive-D | parts by mass | - | - | - | - | - | - | - | - | - |

| Normal state properties | | | | | | | | | | | |
|---|---|---|---|---|---|---|---|---|---|---|---|
| | M100 | MPa | - | - | - | - | 7.0 | 7.0 | 6.9 | 7.0 | 7.2 |
| | TB | MPa | - | - | - | - | 21.0 | 21.1 | 21.7 | 22.1 | 23.2 |
| | EB | % | - | - | - | - | 260 | 260 | 270 | 270 | 270 |
| | HS | - | - | - | - | - | 76 | 76 | 76 | 76 | 76 |
| Compression set (CS) | | | | | | | | | | | |
| | | % | 22 | 31 | 25 | 26 | 24 | 23 | 22 | 22 | 22 |
| Corrosion test | | | | | | | | | | | |
| | | | Poor | Good | Good | Excellent | Excellent | Excellent | Excellent | Excellent | Excellent |

| Steam resistance | | | | | | | | | | | |
|---|---|---|---|---|---|---|---|---|---|---|---|
| | M100 | MPa | - | - | - | - | 6.8 | 6.7 | 6.7 | 6.6 | 6.5 |
| | TB | MPa | - | - | - | - | 20.7 | 20.5 | 20.9 | 20.3 | 20.2 |
| | EB | % | - | - | - | - | 260 | 260 | 270 | 250 | 240 |
| | HS | - | - | - | - | - | 73 | 74 | 74 | 75 | 74 |
| | Rate of volume change | % | 1.8 | 4.5 | 5.6 | 6.1 | 3.6 | 3.5 | 3.4 | 3.1 | 2.3 |

### [Table 1-2]

**Table 1-2**

| | | | | | | | | | | |
|---|---|---|---|---|---|---|---|---|---|---|
| | | | Example 6 | Example 7 | Example 8 | Example 9 | Example 10 | Example 11 | Example 12 | Example 13 |
| Compounding | | | | | | | | | | |
| | Fluoroelastomer A | parts by mass | 100 | 100 | 100 | 100 | 100 | 100 | 100 | 100 |
| | Carbon black | parts by mass | 30 | 30 | 30 | 30 | 30 | 30 | 30 | 30 |
| | Polyfunctional cross-linking aid | parts by mass | 3 | 3 | 3 | 3 | 3 | 3 | 3 | 3 |
| | Organic peroxide | parts by mass | 1 | 1 | 1 | 1 | 1 | 1 | 1 | 1 |
| | Additive-A | parts by mass | - | - | - | - | - | - | - | - |
| | Additive-B | parts by mass | - | - | - | - | - | - | - | - |
| | Additive-C | parts by mass | 0.083 | 0.050 | - | - | - | - | - | - |
| | Additive-D | parts by mass | - | - | 0.500 | 0.250 | 0.125 | 0.100 | 0.083 | 0.050 |

| Normal state properties | | | | | | | | | | |
|---|---|---|---|---|---|---|---|---|---|---|
| | M100 | MPa | 7.2 | 7.1 | 7.1 | 7.0 | 7.1 | 7.0 | 7.0 | 7.1 |
| | TB | MPa | 22.6 | 22.3 | 22.0 | 22.4 | 22.1 | 22.6 | 22.2 | 22.6 |
| | EB | % | 270 | 270 | 270 | **280** | 280 | 290 | 290 | 290 |
| | HS | - | 76 | 76 | 76 | 76 | 76 | 76 | 76 | 76 |
| Compression set (CS) | | | | | | | | | | |
| | | % | 22 | 22 | 24 | 23 | 22 | 22 | 22 | 22 |
| Corrosion test | | | | | | | | | | |
| | | | Good | Acceptable | Excellent | Excellent | Excellent | Excellent | Excellent | Excellent |

| Steam resistance | | | | | | | | | | |
|---|---|---|---|---|---|---|---|---|---|---|
| | M100 | MPa | 6.6 | 6.7 | 6.9 | 6.9 | 7.0 | 6.9 | 6.9 | 6.9 |
| | TB | MPa | 21.1 | 21.1 | 20.4 | 21.1 | 21.5 | 22.0 | 22.1 | 22.3 |
| | EB | % | 250 | 260 | 270 | 270 | 280 | 280 | 270 | 270 |
| | HS | - | 74 | 75 | 74 | 74 | 74 | 75 | 75 | 75 |
| | Rate of volume change | % | 2.0 | 2.0 | 3.3 | 3.1 | 2.8 | 2.3 | 1.9 | 2.0 |

### [Table 2]

**Table 2**

| | | | Comparative Example 5 | Example 14 | Example 15 | Example 16 | Example 17 |
|---|---|---|---|---|---|---|---|
| Compounding | | | | | | | |
| | Fluoroelastomer B | parts by mass | 100 | 100 | 100 | 100 | **100** |
| | Carbon black | parts by mass | 30 | 30 | 30 | 30 | 30 |
| | Polyfunctional cross-linking aid | parts by mass | 3 | 3 | 3 | 3 | 3 |
| | Organic peroxide | parts by mass | 1 | 1 | 1 | 1 | 1 |
| | Additive-C | parts by mass | - | 0.500 | 0.050 | - | - |
| | Additive-D | parts by mass | - | - | - | 0.500 | 0.050 |

| Normal state properties | | | | | | | |
|---|---|---|---|---|---|---|---|
| | M100 | MPa | 4.8 | 5.1 | 4.6 | 4.7 | 4.8 |
| | TB | MPa | 20.9 | 20.3 | 19.9 | 20.7 | 19.1 |
| | EB | % | 280 | 260 | 260 | 270 | 250 |
| | HS | - | 68 | 67 | 68 | 68 | 68 |
| Compression set (CS) | | | | | | | |
| | | % | 16 | 17 | 16 | 17 | 15 |
| Corrosion test | | | | | | | |
| | | | Poor | Excellent | Excellent | Excellent | Excellent |

| Steam resistance | | | | | | | |
|---|---|---|---|---|---|---|---|
| | M100 | MPa | 4.5 | 4.8 | 4.5 | 4.8 | 4.5 |
| | TB | MPa | 20.1 | 20.2 | 20.0 | 19.6 | 20.3 |
| | EB | % | 280 | 270 | 280 | 250 | 290 |
| | HS | - | 67 | 66 | 67 | 67 | 67 |
| | Rate of volume change | % | 2.5 | 5.1 | 3.4 | 4.6 | 3.0 |

### [Table 3]

**Table 3**

| | | | Comparative Example 6 | Example 18 | Example 19 | Example 20 | Example 21 |
|---|---|---|---|---|---|---|---|
| Compounding | | | | | | | |
| | Fluoroelastomer C | parts by mass | 100 | 100 | 100 | 100 | 100 |
| | Carbon black | parts by mass | 30 | 30 | 30 | 30 | 30 |
| | Polyfunctional cross-linking aid | parts by mass | 3 | 3 | 3 | 3 | 3 |
| | Organic peroxide | parts by mass | 1 | 1 | 1 | 1 | 1 |
| | Additive-C | parts by mass | - | 0.500 | 0.050 | - | |
| | Additive-D | parts by mass | - | - | - | 0.500 | 0.050 |

| Normal state properties | | | | | | | |
|---|---|---|---|---|---|---|---|
| | M100 | MPa | 17.4 | 18.0 | 17.2 | 17.7 | 17.3 |
| | TB | MPa | 22.3 | 21.8 | 22.6 | 22.8 | 22.3 |
| | EB | % | 140 | 130 | 140 | 140 | 130 |
| | HS | - | 90 | 89 | 90 | 90 | 91 |
| Compression set (CS) | | | | I 14 | | | |
| | | % | 13 | | 13 | 14 | 13 |
| Corrosion test | | | | | | | |
| | | | Poor | Excellent | Excellent | Excellent | Excellent |

| Steam resistance | | | | | | | |
|---|---|---|---|---|---|---|---|
| | M100 | MPa | 15.9 | 16.2 | 15.8 | 15.5 | 15.6 |
| | TB | MPa | 20.0 | 21.1 | 19.6 | 22.3 | 20.1 |
| | EB | % | 140 | 140 | 130 | 160 | 140 |
| | HS | - | 89 | 88 | 89 | 89 | 89 |
| | Rate of volume change | % | 1.2 | 2.8 | 1.5 | 1.7 | 1.4 |

## Claims

1. A crosslinkable fluoroelastomer composition comprising:
a fluoroelastomer containing bromine atom and/or iodine atom,
a polyfunctional cross-linking aid,
an organic peroxide, and
at least one metal compound selected from the group consisting of magnesium oxide and a solid solution of aluminum oxide and magnesium oxide,
wherein the content of the metal compound is 0.05 to 0.50 parts by mass based on 100 parts by mass of the fluoroelastomer.

2. The crosslinkable fluoroelastomer composition according to claim 1, wherein the fluoroelastomer is at least one selected from the group consisting of a vinylidene fluoride-based fluoroelastomer, a tetrafluoroethylene/propylene-based fluoroelastomer, and a perfluoroelastomer.

3. The crosslinkable fluoroelastomer composition according to claim 1 or 2, wherein the content of the organic peroxide is 0.05 to 10 parts by mass based on 100 parts by mass of the fluoroelastomer.

4. The crosslinkable fluoroelastomer composition according to any one of claims 1 to 3, wherein the content of the polyfunctional cross-linking aid is 0.1 to 10 parts by mass based on 100 parts by mass of the fluoroelastomer.

5. A formed article obtained by crosslinking the crosslinkable fluoroelastomer composition according to any one of claims 1 to 4.
